## Europäisches Patentamt

## European Patent Office

## Office européen des brevets

(11) Veröffentlichungsnummer: **0 449 020 A1**

# EUROPÄISCHE PATENTANMELDUNG

(21) Anmeldenummer: 91103670.5

(22) Anmeldetag: **11.03.91**

(51) Int. Cl.⁵: **G09B 27/08**, G09B 29/12

(30) Priorität: **27.03.90 DE 4009769**

(43) Veröffentlichungstag der Anmeldung:
**02.10.91 Patentblatt 91/40**

(84) Benannte Vertragsstaaten:
**AT CH DE FR GB LI NL**

(71) Anmelder: **Muermann, Irmela**
**Oberbecksener Str. 118**
**W-4970 Bad Oeynhausen 1(DE)**

(72) Erfinder: **Muermann, Hermann**
**Oberbecksener Strasse 118**
**W-4970 Bad Oeynhausen 1(DE)**

(74) Vertreter: **Hentzschel, Hans-Jürgen**
**In der Feldmark 3**
**W-4970 Bad Oeynhausen 1(DE)**

(54) **Verfahren zur Herstellung von Globuskörpern.**

(57) Die Erfindung betrifft ein Verfahren zur Herstellung von Globuskörpern, deren Oberfläche reliefartig ausgestaltet ist, wobei von einem einzeln in Handarbeit und/oder maschinell erstellten, die auf dem Globuskörper abzubildenden Erhebungen bzw. Vertiefungen aufweisenden Modell Negativformen abgegossen und darin Segmente ausgeformt werden. Um vollständige Voraussetzungen für eine industrielle Fertigung solcher Globen in einer ausreichend guten Qualität zu schaffen, wird vorgeschlagen, die in den Negativformen abgegossenen Segmente zu positiven Tiefziehformen weiterzubearbeiten, mittels dieser segmentförmigen positiven Tiefziehformen in deren Abmessungen die spätere Globusoberfläche darstellende, im Zerrdruck farbig bedruckte Kunststoffelemente tiefzuziehen, die auf diese Weise fertiggestellten farbig bedruckten Globusteile unter Verwendung einer Montageform auf ihrer Innenseite mit Kautschuk- oder Kunststoffmassen bzw. anderen geeigneten Mitteln festigkeitsmäßig zu verstärken und anschließend zu einem vollen Globuskörper zusammenzufügen.

EP 0 449 020 A1

Rank Xerox (UK) Business Services

Die Erfindung betrifft ein Verfahren zur Herstellung von Globuskörpern, deren Oberfläche reliefartig ausgestaltet ist. Hierbei kann es sich sowohl um Erdgloben mit der Wiedergabe der Gebirgszüge und gegebenenfalls der Meeres-tiefen als auch um Globen anderer Himmelskörper handeln. Ebenso wäre es denkbar, mit dem Oberflächenrelief statistische Angaben, wie zum Beispiel Bevölkerungszahlen, Niederschlagsmengen, Temperaturwerte oder Wirtschaftsdaten darzustellen. Zweifellos sind in dieser Weise gestaltete Globuskörper erheblich aussagefähiger als mit nur bedruckter glatter Oberfläche versehene Globen.

Bekannte Globuskörper der vorgenannten Art, die gelegentlich zu besonderen Anlässen, beispielsweise für Demonstrationszwecke in Fernsehsendungen Verwendung finden, werden stets einzeln in aufwendiger Handarbeit gefertigt.

Obwohl sich in diesem Zusammenhang auch maschinelle Hilfsmittel einsetzen ließen, wäre die Herstellung größerer Stückzahlen für den allgemeinen Gebrauch trotzdem aus Kostengründen nicht möglich.

Zwar ist in der CH-PS 368 001 bereits ein Verfahren zur Herstellung eines mit einem Hochrelief versehenen Globusses vorgeschlagen worden, das negative Tiefziehformen für die Anfertigung von die Globusoberfläche abschnittsweise darstellenden, aneinanderzufügenden Kunststoffelementen benutzt. Entsprechende Versuche haben jedoch gezeigt, daß auf diesem Wege in der Praxis keine zufriedenstellenden Ergebnisse zu erzielen sind, weil die auf dem Globus abzubildenden Erhebungen oftmals insofern nur unvollständig zustande kommen, als der Kunststoff an solchen Stellen nicht weit genug in die Vertiefungen der Negativformen hineingezogen wird. Letzteres ist insbesondere bei allen größeren Erhebungen der Fall, weshalb sich stets nur ein insgesamt viel zu flaches und demnach zu wenig ausgeprägtes Relief ergibt. Dieser Nachteil dürfte vermutlich der Grund dafür sein, daß derartig gefertigte Globen bis jetzt nicht in den Handel gelangt sind.

Unter den angeführten Gesichtspunkten ist es die Aufgabe der Erfindung, ein Herstellungsverfahren für Globuskörper mit einer plastisch ausgebildeten Oberfläche verfügbar zu machen, mit dem die vollständigen Voraussetzungen für eine industrielle Fertigung in einer ausreichend guten Qualität geschaffen werden. Dabei soll sich neben einer preiswerten auch eine gehobene Ausstattungsform anbieten lassen, um die Anschaulichkeit dieses fortschrittlichen Lehrmittels noch zusätzlich zu erhöhen.

Zur Lösung der gestellten Aufgabe geht die Erfindung von einem einzeln in Handarbeit und/oder maschinell erstellten, die auf dem Globuskörper abzubildenden Erhebungen bzw. Vertiefungen aufweisenden Modell aus, von dem Negativformen abgegossen und darin Segmente ausgeformt werden. Die erfindungsgemäße Fortführung des Verfahrens ist sodann in der Hauptsache dadurch gekennzeichnet, daß

a) die in den Negativformen abgegossenen Segmente zu positiven Tiefziehformen weiterbearbeitet werden,

b) mittels dieser segmentförmigen positiven Tiefziehformen in deren Abmessungen die spätere Globusoberfläche darstellende, im Zerrdruck farbig bedruckte Kunststoffelemente tiefgezogen werden,

c) die auf diese Weise fertiggestellten farbig bedruckten Globusteile unter Verwendung einer Montageform auf ihrer Innenseite mit Kautschukoder Kunststoffmassen bzw. anderen geeigneten Mitteln festigkeitsmäßig verstärkt und anschließend zu einem vollen Globuskörper zusammengefügt werden.

Eine zum gleichen Ergebnis führende Abwandlung können diese Verfahrensschritte erfahren, insofern anstelle der positiven Tiefziehformen an sich bekannte segmentförmige negative Tiefziehformen zum Einsatz gelangen, deren Wirkung durch Druckluftunterstützung und/oder Gegenformen auf der Innenseite der die spätere Globusoberfläche bildenden Kunststoffelemente verbessert wird.

Eine besonders haltbare, vor allem gegen Betasten widerstandsfähige Globusoberfläche erreicht man, wenn in Ergänzung des obigen Verfahrens unter Verwendung entsprechender negativer oder positiver Tiefziehformen durch thermoplastische Verformung aus Klarsichtfolie bestehende, das Relief der Globusoberfläche wiedergebende Halbschalen angefertigt und in diese währenddessen von einer Montageform gestützten durchsichtigen Halbschalen die farbig bedruckten, mit dem jeweiligen Oberflächenrelief versehenen Kunststoffelemente eingelegt und unverschiebbar damit verbunden werden, bevor die auf diese Weise fertiggestellten, gegebenenfalls wiederum auf ihrer Innenseite festigkeitsmäßig verstärkten Globusteile zu einem vollen Globuskörper zusammengefügt werden. Dabei kann die unverschiebbare Verbindung zwischen den aus Klarsichtfolie tiefgezogenen durchsichtigen Halbschalen und den farbig bedruckten Kunststoffelementen mit Heißsiegelkleber unter Wärmeeinwirkung sowie Anpreßdruck oder mit einem transparenten Kleber nur unter Anpreßdruck erfolgen.

In Fortführung des Gedankens, die Globusoberfläche mit einer thermoplastisch verformten Klarsichtfolie abzudecken, ergibt sich ferner bei Erdgloben die Möglichkeit, daß die durchsichtigen Halbschalen nur im Bereich der Landflächen reliefartig, ansonsten aber mit dem Zweck des Durchblicks auf den Meeresboden in Höhe der Meeresoberfläche verlaufend ausgebildet werden. Mit dieser Anordnung lassen sich die Meerestiefen sowie unterseeische Erhebungen ganz besonders deutlich sichtbar machen, aber auch die Verteilung der Land- und Wassermassen auf der Erdoberfläche wird dadurch außerordentlich anschaulich wiedergegeben.

Im vorstehenden Zusammenhang gibt es insofern noch eine andere Variante, als die Erfindung hierzu auch empfiehlt, beim Anfertigen der aus Klarsichtfolie bestehenden Halbschalen eventuell die Landflächen auszusparen und diese demnach nicht mit der Klarsichtfolie abzudecken. Ebenfalls ist daran gedacht, dieselbe Wirkung hervorzurufen, indem man die Meeresflächen bis zur Höhe der Meeresoberfläche mit einer durchsichtigen Vergußmasse auffüllt.

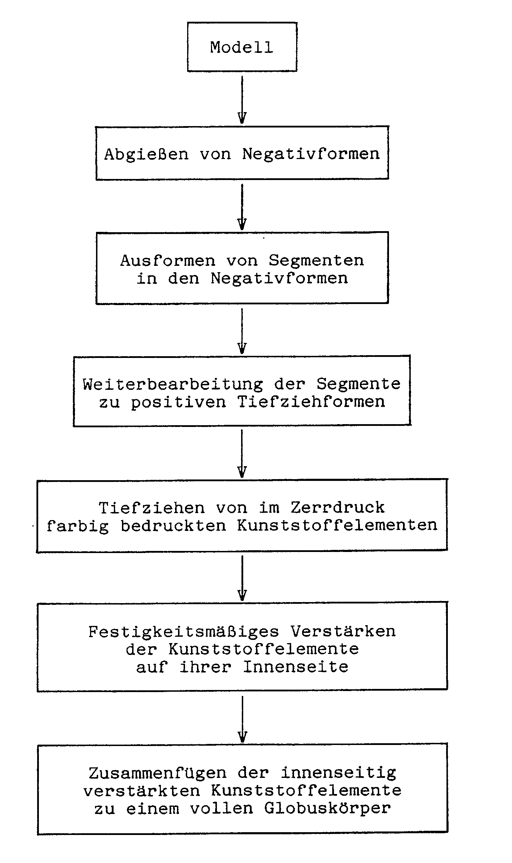

**Patentansprüche**

1.  Verfahren zur Herstellung von Globuskörpern, deren Oberfläche reliefartig ausgestaltet ist, wobei von einem einzeln in Handarbeit und/oder maschinell erstellten, die auf dem Globuskörper abzubildenden Erhebungen bzw. Vertiefungen aufweisenden Modell Negativformen abgegossen und darin Segmente ausgeformt werden, dadurch gekennzeichnet, daß
    a) die in den Negativformen abgegossenen Segmente zu positiven Tiefziehformen weiterbearbeitet werden,
    b) mittels dieser segmentförmigen positiven Tiefziehformen in deren Abmessungen die spätere Globusoberfläche darstellende, im Zerrdruck farbig bedruckte Kunststoffelemente tiefgezogen werden,
    c) die auf diese Weise fertiggestellten farbig bedruckten Globusteile unter Verwendung einer Montageform auf ihrer Innenseite mit Kautschuk- oder Kunststoffmassen bzw. anderen geeigneten Mitteln festigkeitsmäßig verstärkt und anschließend zu einem vollen Globuskörper zusammengefügt werden.

2.  Verfahren nach Anspruch 1, dadurch gekennzeichnet, daß anstelle der positiven Tiefziehformen an sich bekannte segmentförmige negative Tiefziehformen zum Einsatz gelangen, deren Wirkung durch Druckluftunterstützung und/oder Gegenformen auf der Innenseite der die spätere Globusoberfläche bildenden Kunststoffelemente verbessert wird.

3.  Verfahren nach Anspruch 1 oder 2, dadurch gekennzeichnet, daß unter Verwendung entsprechender negativer oder positiver Tiefziehformen durch thermoplastische Verformung aus Klarsichtfolie bestehende, das Relief der Globusoberfläche wiedergebende Halbschalen angefertigt und in diese währenddessen von einer Montageform gestützten durchsichtigen Halbschalen die farbig bedruckten, mit dem jeweiligen Oberflächenrelief versehenen Kunststoffelemente eingelegt und unverschiebbar damit verbunden werden, bevor die auf diese Weise fertiggestellten, gegebenenfalls wiederum auf ihrer Innenseite festigkeitsmäßig verstärkten Globusteile zu einem vollen Globuskörper zusammengefügt werden.

4.  Verfahren nach Anspruch 3, bei dem die als Erdgloben herzustellenden Globuskörper außer den Landflächen auch den Meeresboden reliefartig zeigen, dadurch gekennzeichnet, daß die aus Klarsichtfolie bestehenden Halbschalen nur im Bereich der Landflächen reliefartig, ansonsten aber mit dem Zweck des Durchblicks auf den Meeresboden in Höhe der Meeresoberfläche verlaufend ausgebildet werden.

5.  Verfahren nach Anspruch 4, dadurch gekennzeichnet, daß beim Anfertigen der aus Klarsichtfolie bestehenden Halbschalen die Landflächen ausgespart werden.

6.  Verfahren nach einem der Ansprüche 1 bis 3, dadurch gekennzeichnet, daß bei als Erdgloben mit reliefartigem Meeresboden hergestellten Globuskörpern die Meeresflächen bis zur Höhe der Meeresoberfläche mit einer durchsichtigen Vergußmasse aufgefüllt werden.

```
┌─────────────────┐
│     Modell      │
└─────────────────┘
         │
         ▼
┌──────────────────────────────┐
│  Abgießen von Negativformen  │
└──────────────────────────────┘
         │
         ▼
┌──────────────────────────────┐
│    Ausformen von Segmenten   │
│     in den Negativformen     │
└──────────────────────────────┘
         │
         ▼
┌──────────────────────────────────┐
│  Weiterbearbeitung der Segmente  │
│     zu positiven Tiefziehformen  │
└──────────────────────────────────┘
         │
         ▼
┌──────────────────────────────────────┐
│    Tiefziehen von im Zerrdruck       │
│  farbig bedruckten Kunststoffelementen│
└──────────────────────────────────────┘
         │
         ▼
┌──────────────────────────────────────┐
│    Festigkeitsmäßiges Verstärken     │
│       der Kunststoffelemente         │
│        auf ihrer Innenseite          │
└──────────────────────────────────────┘
         │
         ▼
┌──────────────────────────────────────┐
│   Zusammenfügen der innenseitig      │
│   verstärkten Kunststoffelemente     │
│    zu einem vollen Globuskörper      │
└──────────────────────────────────────┘
```

Europäisches
Patentamt

**EUROPÄISCHER**
**RECHERCHENBERICHT**

Nummer der Anmeldung

**EP 91 10 3670**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 055 124   (GILMER, GRAHAM Jr. et al., US) <br> * Spalte 1, Zeile 64 - Spalte 4, Zeile 38; Ansprüche; Figuren * | 1-3 | G 09 B 27/08 <br> G 09 B 29/12 |
| A | | 4,5 | |
| Y | US-A-4 414 731   (REPLOGLE GLOBES INC.) <br> * Spalte 2, Zeile 57 - Spalte 5, Zeile 16; Ansprüche; Figuren * | 1-3 | |
| A | US-A-3 010 152   (BRAUND, John J. US) <br> * Spalte 2, Zeile 6 - Spalte 7, Zeile 25; Ansprüche; Figuren * | 1,3 | |
| A | DE-B-1 295 178   (BUCCIOTTI, EMILIO et al., IT) <br> * Spalte 3, Zeile 23 - Spalte 4, Zeile 6; Ansprüche; Figuren * | 1,2 | |
| A | DE-B-1 180 557   (GOODSON, ERNEST ALBERT, GB) <br> * Spalte 3, Zeile 24 - Spalte 4, Zeile 20; Ansprüche; Figuren * | 1,3 | |

RECHERCHIERTE
SACHGEBIETE (Int. Cl.5)

G 09 B

Der vorliegende Recherchenbericht wurde für alle Patentansprüche erstellt

| Recherchenort | Abschlußdatum der Recherche | Prüfer |
|---|---|---|
| Den Haag | 23 Mai 91 | GORUN M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
--------------------------------------------------------
& : Mitglied der gleichen Patentfamilie,
    übereinstimmendes Dokument